# DEMANDE DE BREVET EUROPEEN

(11) **EP 1 837 274 A1**
(43) Date de publication de la demande: **26.09.2007**
(21) Numéro de dépôt: 06111408.8
(22) Date de dépôt: 20.03.2006
(51) Int. Cl.: B62K 13/02, B62K 21/02

(54) **Bicyclette**

(71) Demandeur: Mougin, Jean-Jacques, 2300 La Chaux-de-Fonds (CH)
(72) Inventeur: Mougin, Jean-Jacques, 2300 La Chaux-de-Fonds (CH)
(74) Mandataire: GLN

(57) **Abrégé**

La présente invention concerne une bicyclette (8) comprenant notamment un cadre (10) associé, dans sa partie arrière, à une roue arrière (21), et, dans sa partie avant, à une fourche directrice (14) pivotant autour d'un premier axe et formée d'au moins un bras (16), ladite fourche étant reliée à un organe de commande de la direction (18) et à une roue avant (27).

Selon l'invention, ladite fourche est dotée, à l'extrémité du bras, de premiers moyens d'accouplement (28) montés solidaires et mobiles relativement audit bras, de manière à évoluer entre
- une première position pour coopérer avec ladite roue avant (27), dans laquelle lesdits premiers moyens d'accouplement et ledit premier axe sont distants d'une distance D1 de manière à ce que ledit premier axe passe par le milieu du moyeu de la roue avant, et
- une deuxième position pour coopérer, après le retrait de ladite roue avant, avec la partie arrière (20) d'une deuxième bicyclette, dans laquelle lesdits premiers moyens d'accouplement et ledit premier axe sont distants d'une distance D2 de manière à ce que ledit premier axe passe par le milieu du moyeu de la roue arrière de ladite deuxième bicyclette.

## Description

### Domaine technique

La présente invention se rapporte au domaine des sports et loisirs. Elle concerne, plus particulièrement une bicyclette.

### Etat de la technique

La bicyclette est un engin à deux roues, très répandu, permettant à son utilisateur de se déplacer de manière agréable, tout en effectuant un effort physique. Dans certains cas, elle est utilisée simplement en tant que moyen de transport.

Une bicyclette comprend généralement un cadre doté, dans sa partie avant, d'une fourche directrice associée, d'une part, à une première roue et, d'autre part, à un organe de commande de la direction. Le cadre est également doté, dans sa partie arrière, d'une deuxième roue reliée cinématiquement avec des moyens d'entraînement.

Dans une bicyclette de type classique, le cadre est doté d'une unique selle, destinée à permettre à un seul cycliste de prendre place sur l'engin afin qu'il soit en position pour exercer une force sur les moyens d'entraînement pour mettre la deuxième roue en rotation et provoquer le déplacement de la bicyclette.

Lors de promenades à plusieurs, il peut arriver que l'un des cyclistes éprouve une certaine fatigue et que celui-ci se trouve en retard par rapport aux autres cyclistes l'accompagnant, voire en difficulté pour terminer son parcours.

Une variante de bicyclette connue sous le nom de tandem permet à des cyclistes de niveaux différents d'effectuer au même rythme un même parcours. Le cadre d'un tandem est doté d'au moins deux selles, destinées à permettre à au moins deux cyclistes de prendre place sur l'engin. Seul le premier a accès à l'organe de commande de la direction, mais tous deux peuvent exercer une force sur des moyens d'entraînement double, pour mettre la roue arrière en rotation. De nos jours, le tandem constitue une discipline à part entière du cyclisme.

Toutefois, le tandem présente un certain nombre d'aspects contraignants. Tout d'abord, il nécessite un investissement particulier devant généralement se cumuler avec l'achat de bicyclettes individuelles. De plus, de manière évidente, son utilisation manque de souplesse puisque les deux cyclistes qui décident de partir en tandem doivent généralement effectuer ensemble la totalité de leur parcours. Le maniement d'un tandem n'est pas aisé et il faut une certaine adaptation et même une certaine habitude pour faire du tandem en sécurité et avec aisance.

Il a été imaginé des dispositifs permettant d'accoupler deux bicyclettes après avoir retiré la roue avant de l'une d'elle. Mais ces dispositifs souffrent de plusieurs inconvénients. Dans certains exemples anciens, tels que présentés dans le document US 5,372,371, la roue arrière ne comporte qu'un seul pignon et les moyeux avant et arrière sont de largeur similaire. Il est donc relativement simple d'accoupler directement la fourche d'une bicyclette à la roue arrière d'une autre. Mais une telle solution n'est pas satisfaisante avec des bicyclettes modernes munies de plusieurs pignons.

Dans les dispositifs de l'art antérieur, la bicyclette située à l'arrière s'appuie sur l'axe du moyeu de la roue arrière de la bicyclette située à l'avant. Cet axe peut être plus long qu'un axe normal de manière à offrir une zone d'appui à la fourche de la bicyclette située à l'arrière. Toutefois, particulièrement dans une utilisation en tout-terrain, les chocs subis par l'axe de la roue arrière lui font subir d'importantes contraintes qui peuvent conduire à son cisaillement.

De plus, les vis et les différents moyens de serrage à mettre en oeuvre dans l'exemple précité compliquent l'utilisation d'un tel système. Il est nécessaire d'avoir à disposition un outillage minimum pour passer d'une utilisation de bicyclette simple à une utilisation de l'ensemble.

La présente invention a donc pour but de proposer une bicyclette susceptible d'être accouplée à une autre bicyclette selon l'invention, de manière extrêmement simple, sécurisée et réversible. Avantageusement, aucun outillage n'est nécessaire pour effectuer cet accouplement.

### Divulgation de l'invention

De façon plus précise, l'invention concerne une bicyclette comprenant:
- un cadre associé, dans sa partie arrière, à une roue arrière, et, dans sa partie avant, à une fourche directrice pivotant autour d'un premier axe et formée d'au moins un bras, cette fourche étant reliée à un organe de commande de la direction et à une roue avant,
- des moyens d'entraînement reliés cinématiquement à la roue arrière pour la mettre en rotation et provoquer le déplacement de la bicyclette.

La fourche est dotée, à l'extrémité du bras, de premiers moyens d'accouplement montés mobiles relativement au bras, pouvant être disposés
- dans une première position pour coopérer avec la roue avant, les premiers moyens d'accouplement et ledit premier axe étant distants d'une distance D1 de manière à ce que ledit premier axe passe par le milieu du moyeu de la roue avant, ou
- dans une deuxième position pour coopérer, après le retrait de ladite roue avant, avec la partie arrière du cadre d'une deuxième bicyclette, lesdits premiers moyens d'accouplement et ledit premier axe étant distants d'une distance D2 de manière à ce que ledit premier axe passe par le milieu du moyeu de la roue arrière de ladite deuxième bicyclette.

Selon une caractéristique essentielle de l'invention, les premiers moyens d'accouplement comportent une zone d'appui dimensionnée pour être appuyée, dans ladite deuxième position, dans un logement ménagé dans la partie arrière du cadre d'une deuxième bicyclette et un organe de fixation pour rendre solidaires les première et deuxième bicyclettes.

Selon un autre aspect, l'invention concerne également une bicyclette telle que définie ci-dessus. Avantageusement, le cadre comprend, dans sa partie arrière, des deuxièmes moyens d'accouplement pour coopérer avec une deuxième bicyclette dont la fourche est dotée de premiers moyens d'accouplement adaptés pour coopérer avec ces deuxièmes moyens d'accouplement.

Dans un mode particulièrement avantageux, l'invention concerne une bicyclette comportant à la fois une fourche dotée de premiers moyens d'accouplement et un cadre comprenant des deuxièmes moyens d'accouplement tels que définis ci-dessus. Une telle bicyclette peut être accouplée sur l'avant ou sur l'arrière à au moins une autre bicyclette selon l'invention.

### Brève description des dessins

D'autres détails apparaîtront plus clairement à la lecture de la description qui suit, faite en regard du dessin annexé, dans lequel:
- la figure 1 est une vue d'une bicyclette selon l'invention,
- les figures 2 et 3 sont, respectivement, des vues en coupe et en perspective de la fourche d'une bicyclette selon un premier mode de réalisation de l'invention,
- la figure 4 montre deux bicyclettes selon l'invention accouplées, et
- les figures 5 et 6 représentent en gros plan, respectivement en perspective et en coupe, la fourche d'une première bicyclette selon l'invention accouplée à la partie arrière d'une deuxième bicyclette selon l'invention.

### Mode(s) de réalisation de l'invention

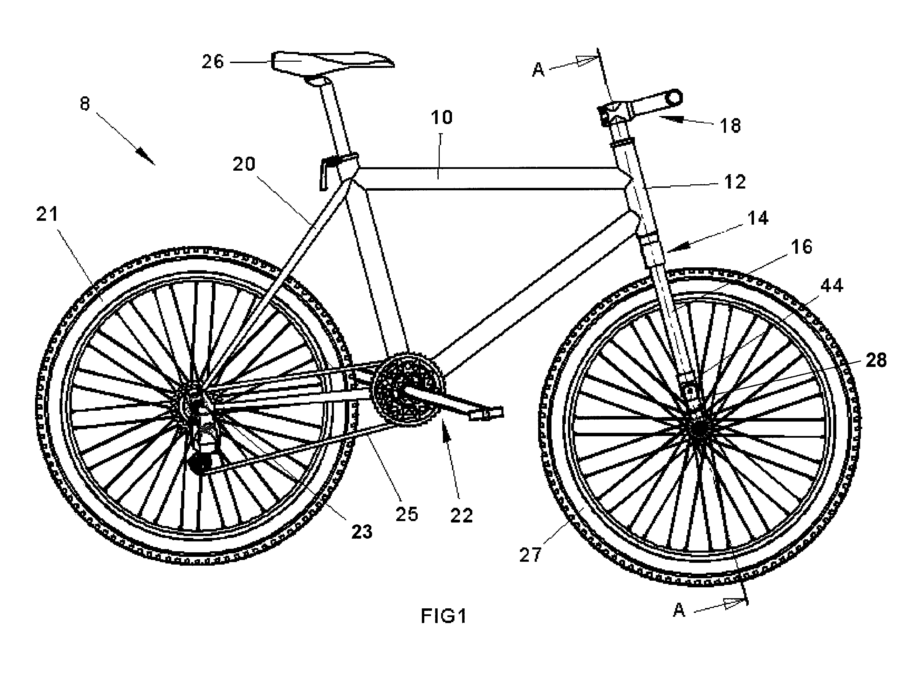

On a représenté sur la figure 1, une bicyclette 8 selon l'invention. Elle comporte, de manière classique, un cadre 10 doté, dans sa partie avant, d'un tube de direction 12 définissant un axe de direction AA autour duquel est montée pivotante une fourche directrice 14. Celle-ci est formée de deux bras 16 et est associée à un guidon 18 constituant un organe de commande de la direction. Le cadre 10 comporte un triangle arrière 20 muni de pattes de fixation pour recevoir une roue arrière 21. Le cadre 10 est encore doté d'un pédalier 22 coopérant avec au moins un pignon 23 associé à la roue arrière 21 par l'intermédiaire d'une chaîne 25. Le pédalier 22, le pignon 23 et la chaîne 25 forment des moyens d'entraînement par l'intermédiaire desquels un cycliste peut mettre la roue arrière 21 en rotation et provoquer le déplacement de la bicyclette 8. Généralement, le cadre 10 comporte en outre une selle 26, destinée à permettre à un cycliste de prendre place sur la bicyclette 8.

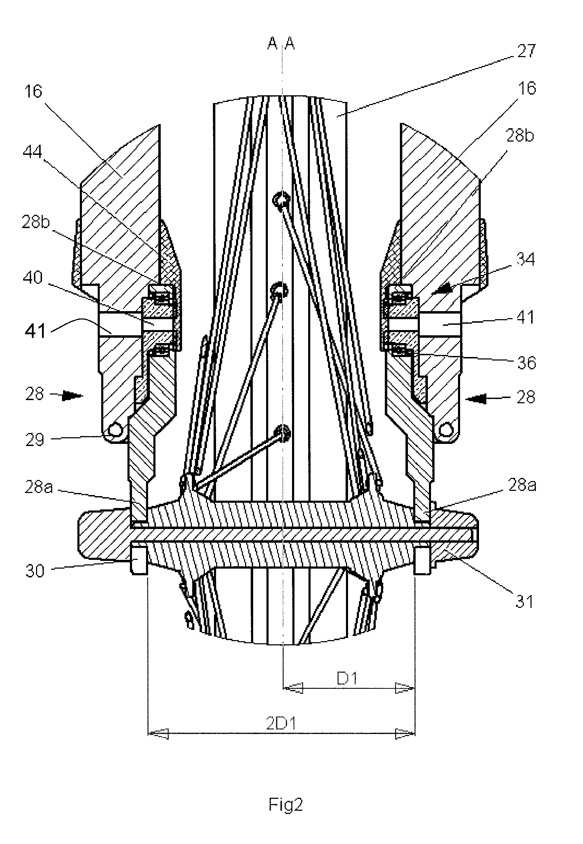

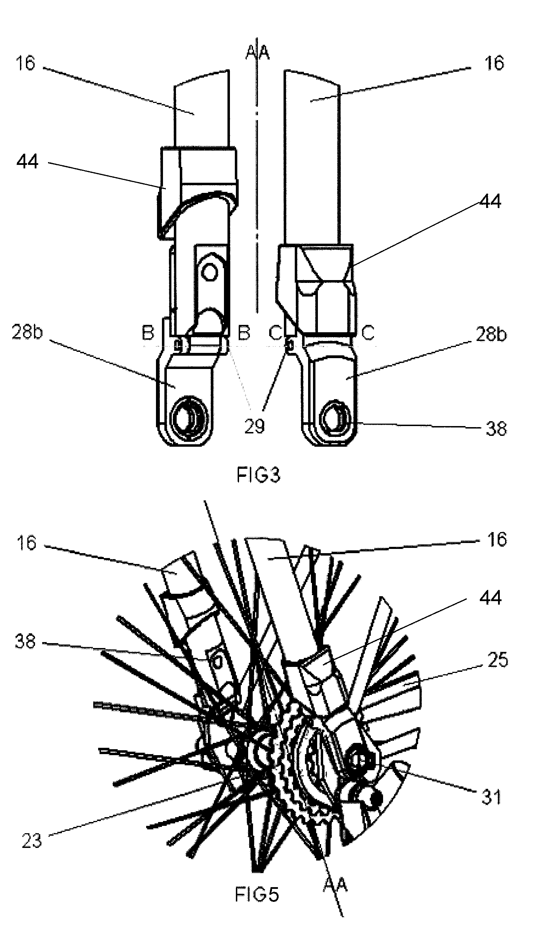

Comme on peut le voir sur la figure 1 et plus particulièrement sur la figure 2, les extrémités des bras 16 de la fourche 14 sont reliées à une roue avant 27, dépourvue de pignon, par l'intermédiaire d'adaptateurs 28 montés articulés, par exemple au moyen d'une charnière 29, respectivement selon des axes BB et CC portés sur la figure 3. Ces axes sont compris dans un plan perpendiculaire à un plan qui comprend les bras 16 et qui est parallèle au moyeu de la roue avant, et sont orientés perpendiculairement au moyeu avant. Les axes définissent une première 28a et une deuxième 28b portions de l'adaptateur.

Ainsi, pour être fixés à la roue avant 27, les adaptateurs 28 sont disposés dans une première position dans laquelle leurs premières portions 28a sont chacune distantes de l'axe de direction d'une distance D1, de manière à ce que cet axe passe sensiblement par le milieu du moyeu de la roue avant. Les deux portions 28a sont alors distantes de 2D1, ce qui correspond environ à la largeur d'un moyeu de roue avant ou, plus précisément, à la dimension qui sépare les deux zones de l'axe du moyeu sur lesquelles, de manière classique, les extrémités de la fourche prennent appui. Dans cette première position, les deuxièmes portions 28b des adaptateurs sont disposées à l'intérieur des bras 16, c'est-à-dire du côté de la roue avant, tandis que les premières portions 28a sont situées dans le prolongement de ces bras 16. Les portions 28a sont munies d'une ouverture 30 pour coopérer avec le moyeu de la roue avant auquel elles peuvent être solidarisées au moyen d'un serrage rapide 31.

L'intérieur des bras 16 de la fourche 14 est conformé de manière à épouser la deuxième portion 28b dans cette première position. Avantageusement, les extrémités des bras présentent une forme aplatie permettant de faciliter l'adaptation des deuxièmes portions sur les bras 16.

La figure 2 montre encore que les deuxièmes portions comportent des inserts 34 pour coopérer, comme on le comprendra ci-après, avec une autre bicyclette. Lorsque les adaptateurs 28 sont dans leur première position, les inserts 34 sont positionnés entre la deuxième portion 28b de l'adaptateur et l'intérieur du bras 16. Les inserts 34 sont fixés aux adaptateurs par l'intermédiaire d'organe d'articulation, tel qu'un roulement 36 ou une bague de friction, téflonnée par exemple, au niveau de trou 38, visible sur la figure 3, que comporte leur deuxième portion. Les inserts 34 sont également percés d'un trou traversant 40 aligné avec les trous 38. Les inserts 34 présentent une portion qui dépasse de l'adaptateur et qui est visible, lorsque l'adaptateur est dans sa première position, entre la portion 28b et la fourche, pour former des zones d'appui avec la deuxième bicyclette.

Pour rigidifier la fourche et améliorer la sécurité de la bicyclette selon l'invention, il est préférable de pouvoir maintenir les adaptateurs 28 dans leur première position. Ceci est obtenu par le biais d'organes de verrouillage pouvant consister, à titre d'exemple non limitatif, en des bagues 44 coulissant sur les bras de la fourche et dont la dimension est ajustée pour pouvoir enserrer un bras 16 de la fourche et la deuxième portion 28b de l'adaptateur lorsqu'il est dans sa première position.

En variante, les organes de verrouillages peuvent aussi être des petits serrages rapides, passant dans des canaux formés par les trous 38 et 40 et par un orifice supplémentaire 41, représenté seulement sur les figures 2, 4 et 5, ménagé dans les bras 16. De manière avantageuse, les moyens de verrouillage sont agencés pour permettre à un utilisateur de maintenir les adaptateurs dans leur première position ou de les libérer facilement.

Un autre aspect de l'invention porte sur une bicyclette dont la partie arrière du cadre 20 présente des moyens d'accouplement à une deuxième bicyclette équipée d'une fourche telle que décrite ci-dessus. Ces moyens consistent en un logement 46 situé à proximité des pattes de fixation de la roue arrière 21, pour coopérer avec les portions 42 des inserts de cette deuxième bicyclette. Plus précisément, ce logement 46 peut présenter la forme d'une gorge en U, dont les parois peuvent ainsi servir de guide lorsque, comme il sera expliqué ci-après, deux bicyclettes sont assemblées.

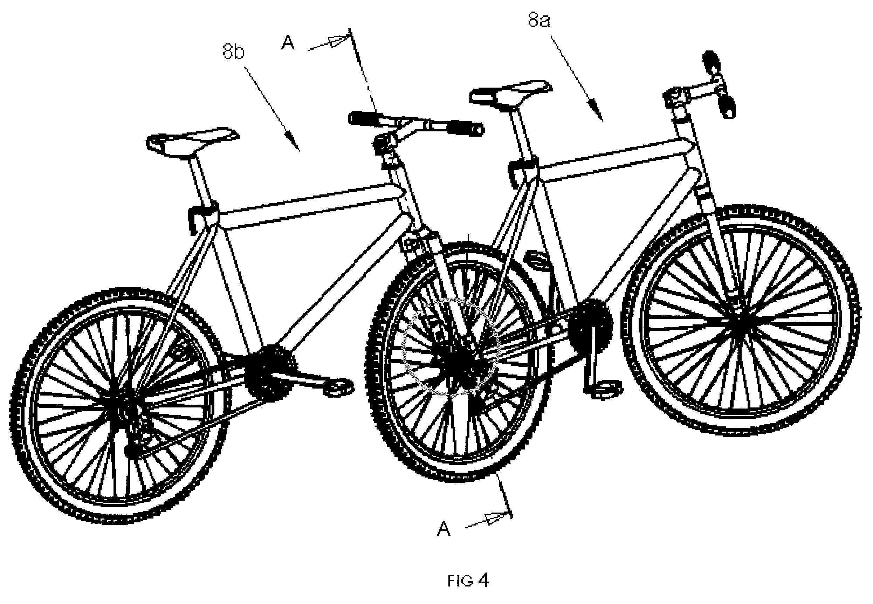

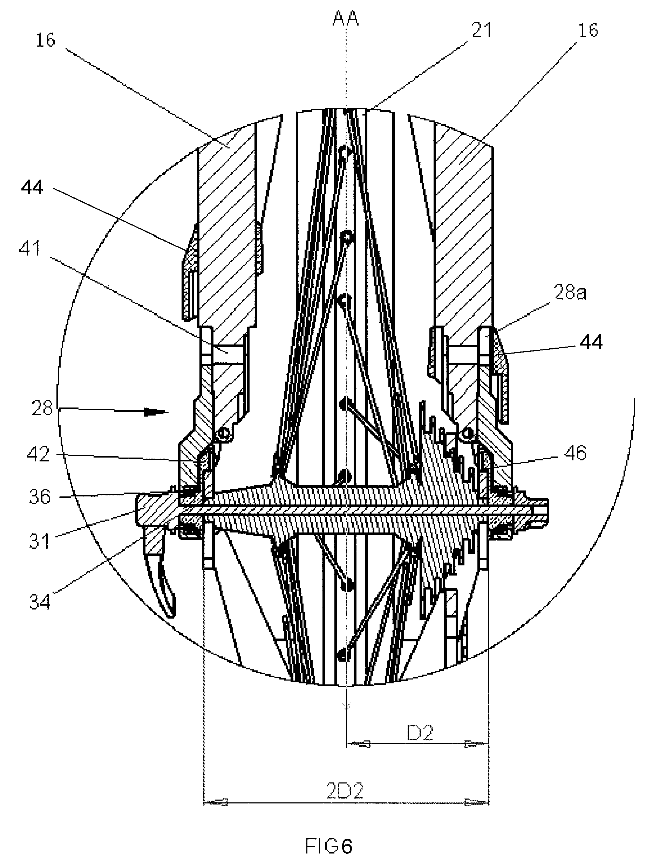

Ainsi, pour accoupler, comme illustré sur la figure 4, une première bicyclette 8a dont le cadre 10 est muni de moyens d'accouplement et une deuxième bicyclette 8b dont la fourche 14 est dotée d'adaptateurs 28, tels que décrits ci-dessus, la roue avant 27 de la première bicyclette est retirée et les adaptateurs 28 de la fourche sont déverrouillés. Ensuite, l'utilisateur les fait pivoter selon leurs axes d'articulation BB et CC pour les mettre dans une deuxième position, particulièrement visible sur les figures 3 et 6, dans laquelle ils sont chacun distants de l'axe de direction d'une distance D2, de manière à ce que cet axe passe sensiblement par le milieu du moyeu de la roue arrière de la première bicyclette. Les deux portions 28b sont alors distantes de 2D2, ce qui correspond environ à la largeur du moyeu de la roue arrière. Plus précisément, 2D2 est légèrement supérieur à la dimension qui sépare les deux zones de l'axe du moyeu sur lesquelles, de manière classique, les pattes de fixation du cadre prennent appui. 2D2 est généralement supérieure à 2D1, à cause de la présence d'un ou de plusieurs pignons portés par le moyen de la roue arrière. Dans cette deuxième position, les premières portions 28a des adaptateurs sont disposées à l'extérieur des bras 16 de la fourche 14, tandis que les deuxièmes portions 28b sont situées dans le prolongement de ces bras 16.

L'extérieur des bras 16 de la fourche 14 est conformé de manière à épouser, dans cette deuxième position, la première portion 28a des adaptateurs. Avantageusement, les extrémités des bras présentent une forme aplatie permettant de faciliter l'adaptation des premières portions sur les bras 16.

Comme le montrent particulièrement les figures 5 et 6, les portions 42 des inserts 34 de la deuxième bicyclette 8b sont dimensionnées de manière à coopérer avec les logements 46 de la première bicyclette. Ainsi, pour assembler les deux bicyclettes, l'utilisateur approche la fourche 16 de la bicyclette 8b dont les adaptateurs 28 sont dans leur deuxième position et les fait glisser dans les logements 46 de la première bicyclette 8a, jusqu'à ce que l'insert vienne en appui au fond du logement 46. Les adaptateurs 28 sont dimensionnés de manière à ce que, lorsque l'insert est en appui au fond du logement 46, les trous 38 et 40 ayant éventuellement servi de moyens de verrouillage de la première position, soient situés dans le prolongement de l'axe du moyeux arrière pour servir d'organe de fixation et permettre de solidariser l'ensemble ainsi formé au moyen d'un serrage rapide 31. Ainsi, grâce à l'appui de l'insert sur le logement 46, les contraintes liées à la présence de la deuxième bicyclette s'exercent sur la première bicyclette et pas sur l'axe du moyeu arrière ni sur le serrage 31. De plus, les parois du logement permettent de guider l'insert 34 lors de son introduction dans ce logement.

Pour améliorer la rigidité et la sécurité du dispositif, il est préférable de pouvoir maintenir les adaptateurs 28 dans leur deuxième position. Les organes de verrouillage de la première position peuvent être utilisés. Dans le cas de l'utilisation de petits serrages rapides, les ouvertures 30 ménagées dans les premières portions 28a des adaptateurs 28 pour recevoir la roue avant 27 sont alignées avec les trous 41 ménagés dans les bras 16 de la fourche 14 pour former des canaux.

En fonctionnement, les inserts 34 de la deuxième bicyclette 8b sont maintenus solidaires en rotation des logements 46 de la première bicyclette 8a, tandis que, grâce à la présence des roulements 36, les adaptateurs 28 et donc l'ensemble de la deuxième bicyclette 8b peuvent pivoter autour de l'axe du moyeu arrière de la première bicyclette 8a. Ainsi, les deux bicyclettes illustrées sur la figure 4 sont articulées selon l'axe de direction AA de la fourche de la deuxième bicyclette 8b et selon l'axe du moyeu arrière de la première bicyclette 8a. Lors du franchissement d'un obstacle, la maniabilité du tricycle ainsi formé et la sécurité des deux cyclistes s'en trouvent grandement améliorés.

Un autre avantage en terme de sécurité procuré par un ensemble de bicyclettes selon l'invention, se situe au niveau du freinage. En effet, les freins avant de la deuxième bicyclette normalement destinés à freiner sa roue avant, sont, du fait que les roues avant et arrière sont normalement de même diamètre, positionnés de manière à pouvoir freiner la roue arrière de la première bicyclette. L'homme du métier pourra sans difficulté obtenir un tel avantage même dans le cas de freins à disque.

Ainsi est proposée une bicyclette dotée de moyens d'accouplement permettant à tout cycliste, dépourvu d'outillage, d'accoupler et de désaccoupler de manière extrêmement aisée, deux bicyclettes, par la fourche de l'une et le triangle arrière de l'autre. Il est alors possible d'évoluer avec un engin présentant les avantages du tandem, sans en présenter les inconvénients.

Bien entendu, la description ci-dessus n'est pas limitative. Notamment, la présente invention peut être adaptée à une fourche monobras, dont seule l'extrémité de ce bras est dotée d'un adaptateur 28. De même, la partie arrière du cadre peut ne pas être en forme de triangle et ne comporter qu'un bras. Dans ce cas, une telle première bicyclette est assemblée, de préférence, avec une deuxième bicyclette dont la fourche est monobras, le bras de la fourche étant situé de même côté que le bras de la partie arrière de la première bicyclette.

Par ailleurs, les adaptateurs 28 peuvent passer de leur première à leur deuxième position de différentes manières. Ils peuvent être articulés selon des axes toujours compris dans un plan perpendiculaire à un plan comprenant les bras 16 et parallèle au moyeu de la roue avant, mais sont orientés parallèlement au moyeu avant. Selon qu'ils sont dans leur première ou dans leur deuxième positions, les adaptateurs prennent place sur le devant ou sur l'arrière des bras de la fourche lorsque celle-ci n'est pas tournée.

Dans une autre alternative, les adaptateurs 28 peuvent être montés pivotants autour de la fourche, en étant disposés sur une bague coulissant dans une gorge ménagée sur la fourche ou en étant positionnés à l'extrémité des bras, dans leur prolongement.

L'homme du métier saura choisir la forme des adaptateurs pour que les dimensions D1 et D2 définies ci-dessus soient respectées.

L'invention peut en outre être adaptée à différents types de cycles, pour assembler des tandems ou un tandem à une bicyclette. Une première bicyclette peut n'être dotée que d'un cadre dont le triangle arrière présente des moyens d'accouplement à une deuxième bicyclette. De même, cette deuxième bicyclette peut n'être dotée que d'une fourche dont les extrémités de chacun de ses bras comportent des moyens d'accouplement pour coopérer, après le retrait de la roue avant, avec la partie arrière de la première bicyclette. Mais de préférence, une bicyclette comportera à la fois une telle fourche et un tel triangle arrière, de manière à pouvoir être indifféremment située à l'avant ou à l'arrière d'un ensemble formé par deux bicyclettes ou pour pouvoir assembler plus de deux bicyclettes.

Lorsque les adaptateurs sont dans leur deuxième position, un système de réglage de leur position peut être prévu de manière à ce qu'ils puissent être adaptés à des moyeux de diverses longueurs, notamment dans le cas où la bicyclette située à l'arrière est accouplée successivement à des bicyclettes dont les moyeux arrières sont équipés d'un nombre différent de pignons. L'homme du métier pourra avantageusement utiliser un excentrique disposé au niveau de la charnière, ou prévoir une telle situation au niveau des adaptateurs qui peuvent être dotés de portions d'épaisseur variable.

## Revendications

1. Bicyclette (8) comprenant:
- un cadre (10) associé, dans sa partie arrière, à une roue arrière (21), et, dans sa partie avant, à une fourche directrice (14) pivotant autour d'un premier axe et formée d'au moins un bras (16), ladite fourche étant reliée à un organe de commande de la direction (18) et à une roue avant (27),
- des moyens d'entraînement (22, 23, 25) reliés cinématiquement à ladite roue arrière pour la mettre en rotation et provoquer le déplacement de la bicyclette,
ladite fourche étant dotée, à l'extrémité dudit bras, de premiers moyens d'accouplement (28) mobiles relativement audit bras, de manière à pouvoir être disposés
dans une première position pour coopérer avec ladite roue avant (27), lesdits premiers moyens d'accouplement et ledit premier axe étant distants d'une distance D1 de manière à ce que ledit premier axe passe par le milieu du moyeu de la roue avant, ou
dans une deuxième position pour coopérer, après le retrait de ladite roue avant, avec la partie arrière (20) du cadre d'une deuxième bicyclette, lesdits premiers moyens d'accouplement et ledit premier axe étant distants d'une distance D2 de manière à ce que ledit premier axe passe par le milieu du moyeu de la roue arrière de ladite deuxième bicyclette,
**caractérisée en ce que** lesdits premiers moyens d'accouplement comportent une zone d'appui dimensionnée pour être appuyée, dans ladite deuxième position, dans un logement ménagé dans ladite partie arrière du cadre d'une deuxième bicyclette, et un organe de fixation (40) pour rendre solidaires lesdites première et deuxième bicyclettes.

2. Bicyclette (8) selon la revendication 1 **caractérisée en ce que** lesdits premiers moyens d'accouplement sont montés solidaires et mobiles relativement audit bras, de manière à évoluer entre lesdites première et deuxième positions.

3. Bicyclette selon l'une des revendications 1 et 2, **caractérisée en ce que** ladite fourche comprend deux bras, dont les extrémités de chacun sont dotées de premiers moyens d'accouplement, les moyens d'accouplement étant distants l'un de l'autre de 2D1 dans la première position et de 2D2 dans la deuxième position.

4. Bicyclette selon l'une des revendications 2 et 3, **caractérisée en ce que** lesdits premiers moyens d'accouplement sont articulés selon un axe compris dans un plan perpendiculaire à un plan comprenant le ou les bras (16) et parallèle au moyeu de ladite roue avant.

5. Bicyclette selon l'une des revendications 1 à 4, **caractérisée en ce que** lesdits premiers moyens d'accouplement comprennent des organes de verrouillage (44) pour les maintenir dans ladite première ou dans ladite deuxième position.

6. Bicyclette selon l'une des revendications 1 à 5, **caractérisée en ce que** ledit organe de fixation est relié aux premiers moyens d'accouplement par l'intermédiaire d'au moins un organe d'articulation (36).

7. Bicyclette (8) comprenant:
- un cadre (10) doté, dans sa partie avant, d'une fourche (14) directrice formée de deux bras (16) et associée à un organe de commande de la direction (18) et à une roue avant (27), et, dans sa partie arrière, d'une roue arrière (21),
- des moyens d'entraînement (22, 23, 25) reliés cinématiquement à ladite roue arrière pour la mettre en rotation et provoquer le déplacement de la bicyclette,
**caractérisée en ce que** ledit cadre (10) comprend, dans sa partie arrière, des deuxièmes moyens d'accouplement pour coopérer avec une deuxième bicyclette selon l'une des revendications 4 et 5.

8. Bicyclette selon l'une des revendications 1 à 6, **caractérisée en ce que** ledit cadre (10) comprend, dans sa partie arrière, des deuxièmes moyens d'accouplement pour coopérer avec une deuxième bicyclette selon l'une des revendications 5 et 6.
